# EUROPEAN PATENT APPLICATION

(11) **EP 4 378 306 A1**
(43) Date of publication of application: **05.06.2024**
(21) Application number: 22867166.5
(22) Date of filing: 19.08.2022
(51) Int. Cl.: A01K 1/015, A01K 1/01

(54) **ABSORBENT SHEET FOR ANIMALS AND ANIMAL TOILET**

(30) Priority: 08.09.2021 JP 2021146280
(71) Applicant: Unicharm Corporation, Ehime 799-0111 (JP)
(72) Inventor: YAMAMOTO, Hiroki, Kanonji-shi, Kagawa 769-1602 (JP); SHUTO, Yoshitaka, Kanonji-shi, Kagawa 769-1602 (JP)
(74) Representative: Dolleymores
(86) International application number: PCT/JP2022/031369
(87) International publication number: WO 2023/037844

(57) **Abstract**

An absorbent sheet (40) for animals to be used in an animal toilet (1), said absorbent sheet comprising a front surface sheet (41), a rear surface sheet (42) and an absorbent body (50), wherein: the absorbent body (50) comprises a first absorbent layer (51) having a highly absorbent polymer and a second absorbent layer (52) that is located on one side in the thickness direction from the first absorbent layer (51) and contains a highly absorbent polymer in liquid absorbent fibers; the first absorbent layer (51) contains an antimicrobial agent (60); and the density of the antimicrobial agent (60) is higher at one side of the first absorbent layer (51) in the thickness direction than at the other side of the first absorbent layer (51) in the thickness direction.

## Description

### FIELD

The present invention relates to an animal absorbent sheet and an animal litter box.

### BACKGROUND

Animal litter boxes for use by animals such as cats are commonly known which include an excrement receiving part and a sheet housing portion located below the receiving part. A plurality of holes are provided on the bottom of the excrement receiving part, and body fluids as excrement pass through the holes and reach the sheet housing portion. The sheet housing portion holds an animal absorbent sheet, and the body fluids are absorbed and kept in the sheet. Patent Document 1 discloses an animal absorbent sheet which includes a liquid-permeable topsheet, a liquid-impermeable backsheet, and an absorbent body provided between these sheets. The absorbent body (absorbent core) includes an upper pulp layer which contains pulps, and an lower pulp layer which contains pulps and is placed closer to the backsheet than the upper pulp layer is.

### [CITATION LIST]

### [PATENT LITERATURE]

Patent Document 1: Japanese Patent Application Publication No. 2020-188698

### SUMMARY

### [TECHNICAL PROBLEM]

Patent Document 1 describes that a powdery antibacterial may be provided between the upper pulp layer and the lower pulp layer. It is described that this makes it possible to exhibit the antibacterial function during the passage of the bodily fluid, making it possible to suppress the bacterial proliferation in the bodily fluid held by the absorbent sheet. However, in this case, the bodily fluid is likely to remain between pulp fibers in the upper pulp layer, and the antibacterial agent is less likely to come into contact with the bodily fluid. Especially, an absorbent sheet for an animal litter box is used for a long period of time of approximately one week, and as a result, odors are more likely to be generated due to the bacterial proliferation in the upper pulp layer. Patent Document 1 also describes that the antibacterial agent may be disposed between a cover sheet, which covers the absorbent core, and the topsheet. However, in this case, a large amount of the antibacterial agent comes into contact with and is used for the bodily fluid that has initially excreted and remains in fibers of the upper pulp layer, and therefore the antibacterial agent is less likely to come into contact with a later-excreted bodily fluid. This makes it more likely to generate odors from the absorbent sheet. On the other hand, in the case where a large amount of antibacterial agent is provided between the cover sheet and the topsheet so as to come into contact also with the subsequently-excreted bodily fluid, the antibacterial agent may inhibit the absorption of the bodily fluid. Furthermore, in the case where a large amount of the antibacterial agent is provided around the topsheet, there is a risk of irritating the hands of a user (e.g. pet owner) when setting the absorbent sheet to the litter box.

The present invention has been achieved in light of problems described above and an aspect of the present invention is to provide an animal absorbent sheet that is safe, is less likely to generate odors from the excreted fluid and is well-absorbent for the excreted fluid, and further to provide an animal litter box in which the animal absorbent sheet can be placed.

### [SOLUTION TO PROBLEM]

A main disclosure for achieving the above-described aspect is an animal absorbent sheet used for an animal litter box, the animal litter box including: an upper container having a plurality of holes on a bottom portion; and an lower container for receiving an excreted fluid that has passed through the plurality of holes, the animal absorbent sheet being placed in the lower container of the animal litter box, the animal absorbent sheet including: an liquid-permeable top-surface sheet; an liquid-impermeable back-surface sheet that is located on a one side of the top-surface sheet in a thickness direction of the animal absorbent sheet; and an absorbent body that is located between the top-surface sheet and the back-surface sheet, the absorbent body having a first absorbent layer and a second absorbent layer that is located closer to a one side in the thickness direction with respect to the first absorbent layer, the first absorbent layer being a layer that contains a superabsorbent polymer, the second absorbent layer being a layer formed of mixture of a liquid-permeable fiber and the superabsorbent polymer, the first absorbent layer containing an antibacterial agent, a density of the antibacterial agent being higher in a one-side portion of the first absorbent layer in the thickness direction than in an other-side portion of the first absorbent layer in the thickness direction.

Features of the present invention other than the above will become clear by reading the description of the present specification with reference to the accompanying drawings.

### [ADVANTAGEOUS EFFECT OF THE INVENTION]

According to the present invention, it is possible to provide an animal absorbent sheet that is safe, is less likely to generate odors from the excreted fluid and is well-absorbent for the excreted fluid, and further to provide an animal litter box in which the animal absorbent sheet can be placed.

### BRIEF DESCRIPTION OF DRAWINGS

FIG.1 is a schematic perspective view of an animal litter box 1.
FIG.2 is an exploded side view of the animal litter box 1.
FIG. 3 is a plan view of an animal absorbent sheet 40.
FIG. 4 is a schematic cross-sectional view taken along line A-A in FIG. 3.
FIGS. 5A and 5B are diagrams showing the fiber gradient in a top-surface sheet 41.
FIG. 6A is a plan view of an absorbent sheet 40, FIG. 6B is a plan view of a tray 21 provided in the animal litter box 1, and FIG. 6C is a plan view of an upper container 10.
FIG. 7 is a plan view of the animal litter box 1 in which the absorbent sheet 40 is placed.

### DESCRIPTION OF EMBODIMENTS

At least the following matters will be clear with the description of this specification and the attached drawing.

An animal absorbent sheet used for an animal litter box, the animal litter box including: an upper container having a plurality of holes on a bottom portion; and an lower container for receiving an excreted fluid that has passed through the plurality of holes, the animal absorbent sheet being placed in the lower container of the animal litter box, the animal absorbent sheet including: an liquid-permeable top-surface sheet; an liquid-impermeable back-surface sheet that is located on a one side of the top-surface sheet in a thickness direction of the animal absorbent sheet; and an absorbent body that is located between the top-surface sheet and the back-surface sheet, the absorbent body having a first absorbent layer and a second absorbent layer that is located closer to a one side in the thickness direction with respect to the first absorbent layer, the first absorbent layer being a layer that contains a superabsorbent polymer, the second absorbent layer being a layer formed of mixture of a liquid-permeable fiber and the superabsorbent polymer, the first absorbent layer containing an antibacterial agent, a density of the antibacterial agent being higher in a one-side portion of the first absorbent layer in the thickness direction than in an other-side portion of the first absorbent layer in the thickness direction.

According to the above-described animal absorbent sheet, in a boundary portion between the first absorbent layer and the second absorbent layer, the excreted fluid that is in the state of a free-movable water and disperses in the planar direction can come into contact with the more antibacterial agent. This makes it possible to further suppress the bacterial proliferation in the excreted fluid and the odor generation from the animal absorbent sheet. In addition, reducing the amount of the antibacterial agent in a top-surface-side portion of the first absorbent layer makes it possible to suppress the absorption inhibition due to the antibacterial agent, making it possible to ensure the absorbency of the absorbent sheet. Furthermore, it is possible to prevent the seepage of the antibacterial agent into the top-surface sheet side, making it safe.

In such an animal absorbent sheet, it is characterized that the second absorbent layer contains an antibacterial agent.

According to the above-described animal absorbent sheet, between the liquid-permeable fibers included in the second absorbent layer, the excreted fluid that exists in the state of the free-movable water can come into contact with the antibacterial agent, making it possible to suppress the odor generation from the animal absorbent sheet.

In such an animal absorbent sheet, it is characterized that the density of the antibacterial agent is higher in an other-side portion of the second absorbent layer in the thickness direction than in a one-side portion of the second absorbent layer in the thickness direction.

According to the above-described animal absorbent sheet, in the boundary portion between the first absorbent layer and the second absorbent layer, the excreted fluid that is in the state of the free-movable water and disperses in the planar direction can come into contact with the more antibacterial agent, making it possible to suppress the odor generation from the animal absorbent sheet. Moreover, the small amount of the excreted fluid permeates into the back-surface-side portion of the second absorbent layer, and therefore it is possible to suppress an unnecessary amount of antibacterial agent from being provided.

In such an animal absorbent sheet, it is characterized that at least either one of the antibacterial agent contained in the first absorbent layer and the antibacterial agent contained in the second absorbent layer is water-soluble.

According to the above-described animal absorbent sheet, when the antibacterial agent comes into contact with the excreted fluid, the antibacterial agent dissolves in the excreted fluid, making it likely to cause the antibacterial effect in the entire excreted fluid. This enhances the antibacterial effect on the excreted fluid, making it possible to further suppress the more odor generation from the absorbent sheet.

In such an animal absorbent sheet, it is characterized that the animal absorbent sheet has a liquid-permeable intermediate sheet between the top-surface sheet and the first absorbent layer, and that the superabsorbent polymer contained in the first absorbent layer is attached to a back-surface side of the intermediate sheet.

According to the above-described animal absorbent sheet, the excreted fluid that is in the state of the free-movable water and between fibers constituting the top-surface sheet is absorbed by the superabsorbent polymer and is reduced. This makes it possible to suppress the bacterial proliferation in the excreted fluid kept in the top-surface sheet and the odor generation from the top-surface sheet.

In such an animal absorbent sheet, it is characterized that the animal absorbent sheet has a liquid-permeable intermediate sheet between the top-surface sheet and the first absorbent layer, and that the intermediate sheet contains an antibacterial agent.

According to the above-described animal absorbent sheet, the excreted fluid that is in the state of the free-movable water and between fibers constituting the intermediate sheet can come into contact with the antibacterial agent, making it possible to suppress the odor generation from the intermediate sheet.

In such an animal absorbent sheet, it is characterized that the animal absorbent sheet has a liquid-permeable other intermediate sheet between the second absorbent layer and the back-surface sheet, and that the other intermediate sheet contains an antibacterial agent.

According to the above-described animal absorbent sheet, the excreted fluid that is in the state of the free-movable water and between fibers constituting the other intermediate sheet can come into contact with the antibacterial agent, making it possible to suppress the odor generation from the other intermediate sheet.

In such an animal absorbent sheet, it is characterized that a basis weight of the top-surface sheet is equal to or more than 28 g/m².

According to the above-described animal absorbent sheet, it makes it less likely to visually recognize the color of the excreted fluid that has been absorbed by the absorbent layers through the top-surface sheet (the color of the absorbent sheet becomes similar to one in the state before the excretion is performed), making a user less likely to be aware of the odor of the excreted fluid.

In such an animal absorbent sheet, it is characterized that the top-surface sheet contains an antibacterial agent.

According to the above-described animal absorbent sheet, the excreted fluid that is in the state of the free-movable water and between fibers constituting the top-surface sheet can come into contact with the antibacterial agent, making it possible to suppress the odor generation from the top-surface sheet.

In such an animal absorbent sheet, it is characterized that a density of fibers that constitute the top-surface sheet is higher in an other-side portion of the top-surface sheet in the thickness direction than in a one-side portion of the top-surface sheet in the thickness direction.

According to the above-described animal absorbent sheet, the excreted fluid is dispersed on the top-surface side of the top-surface sheet, and the more excreted fluid that is dispersed in the planar direction comes into contact with the antibacterial agent of the first absorbent layer, making it possible to suppress the odor generation from the animal absorbent sheet.

In such an animal absorbent sheet, it is characterized that a density of fibers that constitute the top-surface sheet is lower in an other-side portion of the top-surface sheet in the thickness direction than in a one-side portion of the top-surface sheet in the thickness direction.

According to the above-described animal absorbent sheet, the excreted fluid is likely to quickly permeate from the top-surface side to the back-surface side of the top-surface sheet. Thereby the excreted fluid becomes likely to transfer to the first absorbent layer, making the excreted fluid likely to be absorbed in the superabsorbent polymer. This enables to reduce the amount of the excreted fluid that remains in the state of the free-movable water and between fibers constituting the top-surface sheet, making it possible to suppress the odor generation.

In such an animal absorbent sheet, it is characterized that the first absorbent layer has a portion that a plurality of the superabsorbent polymers are stacked in the thickness direction.

According to the above-described animal absorbent sheet, the more excreted fluid is absorbed and retained in the superabsorbent polymer in the first absorbent layer. Accordingly, the amount of the excreted fluid (the free-movable water) that remains, for example, between fibers of the second absorbent layer can be reduced, making it possible to suppress the odor generation from the animal absorbent sheet.

In such an animal absorbent sheet, it is characterized that the first absorbent layer contains a water-sensitive fragrance.

According to the above-described animal absorbent sheet, when the excreted fluid permeates into the first absorbent layer and comes into contact with the water-sensitive fragrance, the fragrance is released. The fragrance can mask the odor of the excreted fluid that has been excreted in the animal absorbent sheet, making the users less likely to be aware of the odor from the excreted fluid.

In such an animal absorbent sheet, it is characterized that a density of the antibacterial agent is higher in an other-side portion of the second absorbent layer in the thickness direction than in the other-side portion of the first absorbent layer in the thickness direction.

According to the above-described animal absorbent sheet, in the top-surface-side (other-side) portion of the second absorbent layer, the excreted fluid that is in the state of the free-movable water and disperses in the planar direction can come into contact with the more antibacterial agent, making it possible to suppress the odor generation from the animal absorbent sheet. In addition, reducing the amount of the antibacterial agent in the top-surface-side portion of the first absorbent layer makes it possible to suppress the absorption inhibition due to the antibacterial agent, making it possible to prevent the seepage of the antibacterial agent into the top-surface sheet side.

Further, the animal litter box in which the animal absorbent sheet can be placed, characterized in that an area of a region on the upper container where the plurality of holes are provided is smaller than an area of the absorbent body when the animal absorbent sheet is viewed in the thickness direction.

According to the above-described animal absorbent sheet, when the animal absorbent sheet in a state of being placed is viewed from above, an entirety of the region where the plurality of holes are provided is likely to be placed on the absorbent body of the animal absorbent sheet. Therefore, the absorbent body containing the antibacterial agent can receive the excreted fluid that has passed through the plurality of holes, making it possible to suppress the odor generation from the excreted fluid that has been excreted in the animal litter box.

### EMBODIMENT

The animal absorbent sheet according to the present embodiment and the animal litter box in which the animal absorbent sheet is placed is used by animals who are kept indoors, such as cats, for example. The "animals" in the present specification include not only commonly known pets such as cats, dogs, rabbits, hamsters, and the like but also young offspring of tigers or lions and the like.

### Basic Configuration of Animal Litter Box 1

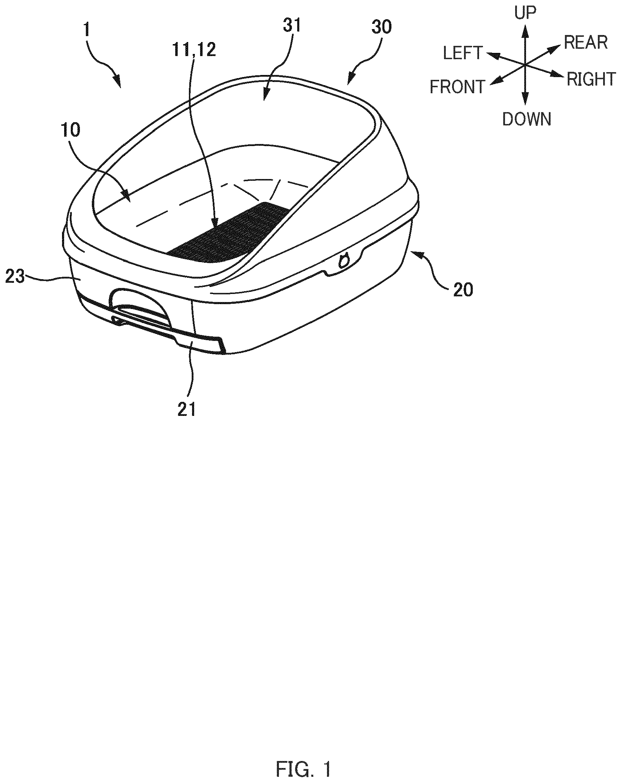

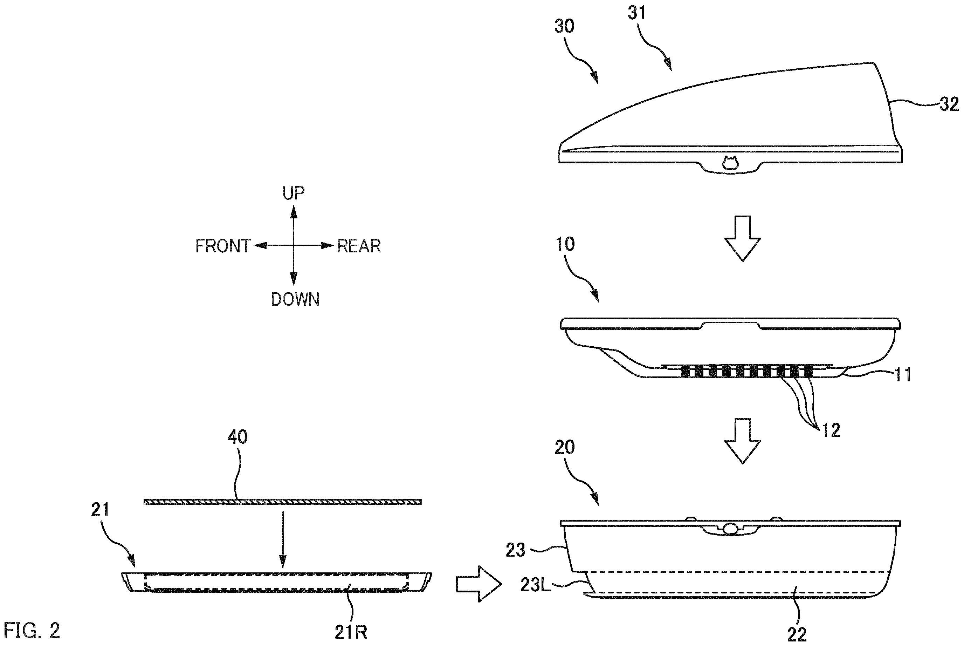

FIG.1 is a schematic perspective view of an animal litter box 1. FIG.2 is an exploded side view of the animal litter box 1. The animal litter box 1 has a front-rear direction, a lateral direction and a vertical direction that are orthogonal to one another. The front-rear direction is a direction extending along the longitudinal direction of the animal litter box 1, and the side provided with an entrance for animals is defined as the front side. The lateral direction is a direction extending along the width direction of the animal litter box 1. The vertical direction is a direction extending along the up-down direction.

The animal litter box 1 includes an upper container 10, a lower container 20, and a cover 30. The lower container 20 has a tray 21 in which an animal absorbent sheet 40 can be placed. These four members can freely be attached to and detached from each other.

The upper container 10 is a substantially box-shaped member having an open upper side, and an animal performs excretion on the upper surface of a bottom portion 11 of the upper container 10. The bottom portion 11 has a plurality of holes 12 that allow excreted fluid (such as urine) excreted by an animal to pass through downward (holes penetrating the bottom portion 11 in the vertical direction).

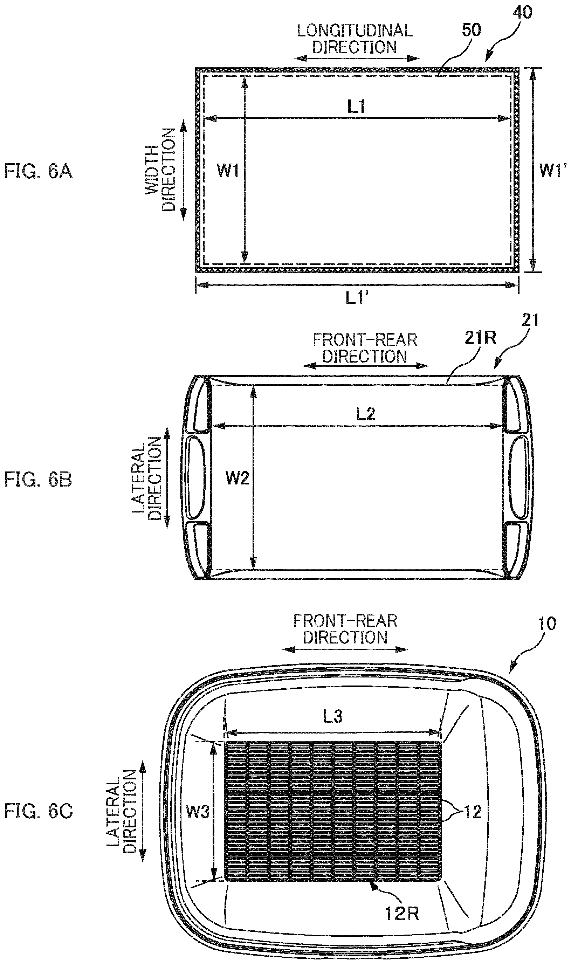

In the animal litter box 1, it is possible to use granules such as cat litter (not shown, granules having deodorizing and antibacterial effects, e.g. zeolite, silica gel, pulp or wood) by being placed on the bottom portion 11 of the upper container 10. On the bottom portion 11 of the upper container 10 of the present embodiment, the plurality of holes 12, which are rectangular in a plan view, are lined up in the front-rear direction and the lateral direction (see FIG. 6C as described later). The shape, number, size, arrangement and the like of the holes 12 are not particularly limited, however, it is preferred that the shape and size do not allow the above-mentioned granules to pass through. Moreover, the animal litter box 1 can be used without the above-mentioned granules.

The lower container 20 is a substantially box-shaped member having an open upper side. When the animal litter box 1 is used, the lower container 20 is stacked below and attached to the upper container 10, supporting the upper container 10. The lower container 20 has the tray 21 and a tray housing portion 22. The tray 21 is accommodated in the tray housing portion 22, which is a portion indicated by the dashed lines in FIG. 2, by sliding backward in the front-rear direction from an opening 23L, which is provided below a front wall portion 23 of the lower container 20. The tray 21 is a shallow and flat box-shaped container having a sheet housing portion 21R that accommodates the animal absorbent sheet 40. The lower container 20 is not limited to having the tray 21, and for example, the animal absorbent sheet 40 can directly be placed on the bottom portion of the lower container 20.

The cover 30 has an opening 31 and a wall portion 32. When the cover 30 is attached to the upper container 10 on its upper side, the wall portion 32 stand upward like a wall, on the right, left, and back sides of the upper container 10. The cover 30 can suppress scatter of excretion and/or granules such as cat litter. However, the animal litter box 1 does not have to have the cover 30.

An animal such as cat enters the animal litter box 1 from the opening 31 of the cover 30, stands on the bottom portion 11 of the upper container 10 or on the granules (e.g., cat litter) placed on the bottom portion 11, and perform excretion. The excreted fluid such as urine passes through the plurality of holes 12 provided in the bottom portion 11 of the upper container 10, and drops downward to the lower container 20. The excreted fluid is absorbed by the animal absorbent sheet 40 accommodated in the tray 21 of the lower container 20 and is stored in the tray 21. A user (an animal owner and the like) can cleanly use the animal litter box 1 by regularly replacing the animal absorbent sheet 40.

### Animal absorbent sheet 40

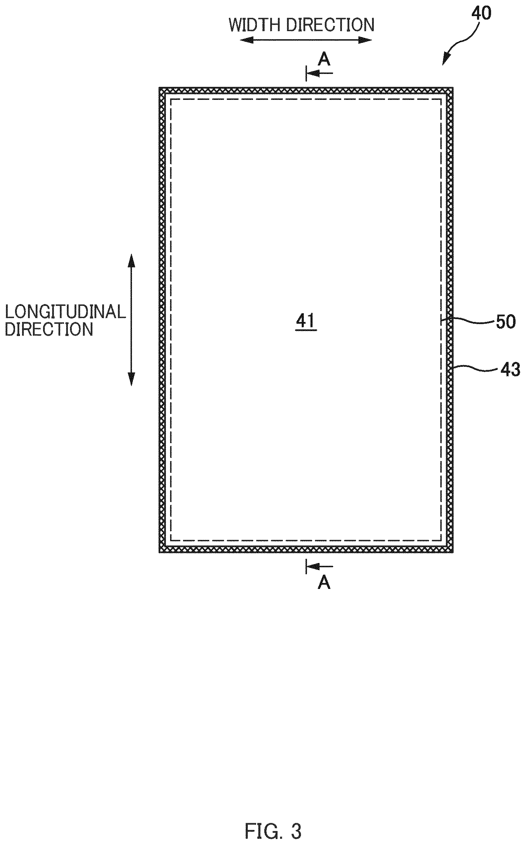

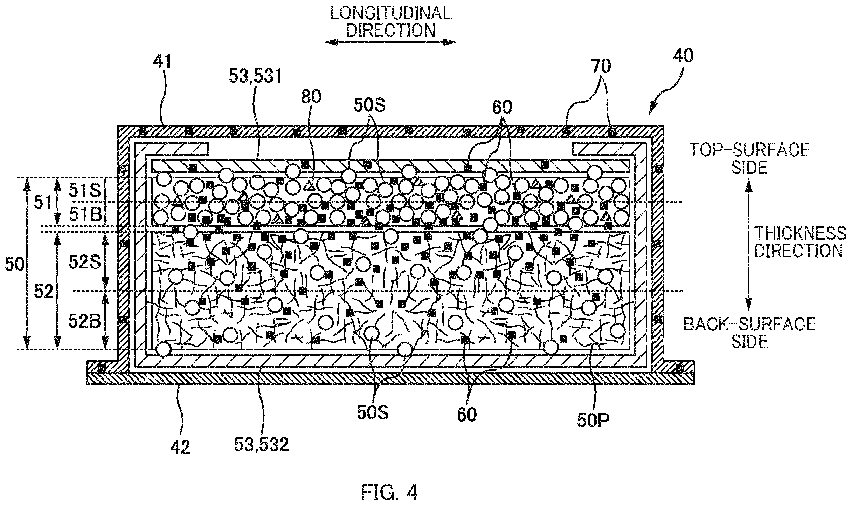

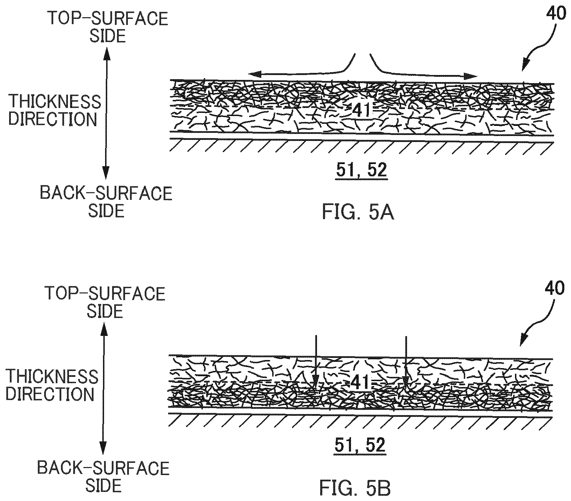

FIG. 3 is a plan view of the animal absorbent sheet 40 (hereinafter also referred to as an absorbent sheet). FIG. 4 is a schematic cross-sectional view taken along line A-A in FIG. 3. FIGS. 5A and 5B are diagrams showing the fiber gradient in a top-surface sheet 41.

The absorbent sheet 40 is a sheet member that is rectangular in a plan view, and has a longitudinal direction, a width direction, and a thickness direction, that orthogonal to one another. In the following description, in the thickness direction, an excretion side, on which an animal excretion is received (the other side) is also referred to as a top-surface side, and the opposite side, on which excretion is not received (one side) is also referred to as a back-surface side. Note that the shape of the absorbent sheet 40 in a plan view is not limited to the rectangular shape.

The absorbent sheet 40 includes: a liquid-permeable top-surface sheet 41, an liquid-impermeable back-surface sheet 42 that is located on the back-surface side of the top-surface sheet 41 in the thickness direction of the absorbent sheet 40; and an absorbent body 50 located between the top-surface sheet 41 and the back-surface sheet 42. As the top-surface sheet 41, it is possible to employ nonwoven fabric (air-through nonwoven fabric and the like). As the back-surface sheet 42, it is possible to employ A resin film sheet and the like.

The planar shape of the absorbent body 50 is one level smaller than the top-surface sheet 41 and the back-surface sheet 42. As shown in FIG. 3, a periphery portion of the absorbent sheet 40 that is located outside the absorbent body 50 has a joining portion 43 where the top-surface sheet 41 and the back-surface sheet 42 are joined. As a method for joining the joining portion 43, it is possible to use an adhesive, welding and the like. The joining portion 43 can suppress a seepage of excreted fluid.

Furthermore, as shown in FIG.4, the absorbent body 50 includes: a first absorbent layer 51; a second absorbent layer 52 that is located closer to the back-surface side in the thickness direction with respect to the first absorbent layer 51; and a cover sheet 53 that covers the first absorbent layer 51 and the second absorbent layer 52. The first absorbent layer 51 contains a superabsorbent polymer 50S. The second absorbent layer 52 is a layer formed of mixture of liquid-absorbent fibers and the superabsorbent polymer s 50S. The liquid-absorbent fiber of the present embodiment is a pulp fiber 50P, but are not limited thereto. For example, the liquid-absorbent fiber may be cellulose fiber (e.g., rayon fiber, cotton fiber), synthetic fiber (e.g., polyethylene), and any combination thereof. Further, in the following description, the first absorbent layer 51 and the second absorbent layer 52 are also collectively referred to as "the absorbent layers 51 and 52".

The cover sheet 53 is a liquid-permeable sheet such as tissue or nonwoven fabric. The cover sheet 53 of the present embodiment has a first cover sheet 531 that covers the top surface of the first absorbent layer 51, and a second cover sheet 532 that covers the back surface of the second absorbent layer 52. Furthermore, both longitudinal ends of the second cover sheet 532 are folded back inward in the longitudinal direction so as to be located on the top surface of the first cover sheet 531 while covering along the longitudinal side edges of the absorbent layers 51 and 52. However, the configuration of the cover sheet 53 is not limited to the above. For example, the longitudinal ends of the second cover sheet 532 do not have to be folded back on the top-surface side, or a configuration may be acceptable in which a single cover sheet covers the absorbent layers 51 and 52 (in other words, an intermediate sheet and another intermediate sheet is configured by a single sheet). The absorbent layers 51 and 52 do not have to be covered by a cover sheet.

The absorbent sheet 40 of the present embodiment is placed in the animal litter box 1, and used for a comparatively long time of approximately one week, and during usage, an animal performs excretion repeatedly. For this reason, the absorbent layers 51 and 52 may have a water-retaining capacity of 1000 g/m², or preferably, 2000 g/m².

By using the absorbent sheet 40 for a long period of time, bacteria is likely to proliferate in the excreted fluid that has been absorbed in the absorbent sheet 40, the proliferated bacteria decompose the components of the excreted fluid, and thus odor (unpleasant odor) is more likely to be generated. Especially, the bacteria is likely to proliferate and odor is likely to be generated in the excreted fluid which is not retained in the superabsorbent polymer 50S and stays between the pulp fibers 50P, that is, the excreted fluid in a state of free-movable water (the excreted fluid that can move freely).

The first absorbent layer 51 contains an antibacterial agent 60. In addition, the density (g/m³) of the antibacterial agent 60 is higher in a portion 51B of the first absorbent layer 51 that is located on the back-surface side (side on which excretion is not received) in the thickness direction than in a portion 51S of the first absorbent layer 51 that is located on the top-surface side (side on which excretion is received) in the thickness direction.

Specifically, as shown in FIG.4, when the first absorbent layer 51 is divided into two in the thickness direction, the weight (g) of the antibacterial agent 60 provided in the back-surface-side portion 51B is heavier than the weight (g) of the antibacterial agent 60 provided in the top-surface-side portion 51S.

In the first absorbent layer 51, the excreted fluid is quickly absorbed by and retained in the superabsorbent polymer 50S. On the other hand, since the second absorbent layer 52 has the pulp fibers 50P, the excreted fluid is likely to spread in the planar direction at the boundary portion that is between the first absorbent layer 51 and the second absorbent layer 52. Accordingly, the absorbent body 50 can be used effectively over a wide range in the planar direction. However, in the space of the pulp fibers 50P, the excreted fluid is likely to be in the state of the free-movable water, odor is likely to be generated due to the bacterial proliferation.

Therefore, it is preferable that, the more antibacterial agent 60 is arranged in the back-surface-side portion 51B of the first absorbent layer 51, that is, in the boundary portion between the first absorbent layer 51 and the second absorbent layer 52. As a result, in the boundary portion between the first absorbent layer 51 and the second absorbent layer 52, the excreted fluid that is in the state of free-movable water and disperses in the planar direction can come into contact with the more antibacterial agent 60. This makes it possible to further suppress the bacterial proliferation in the excreted fluid, and the odor generation from the absorbent sheet 40.

Moreover, the excreted fluid permeates into the absorbent layers 51 and 52 as the absorbent sheet 40 repeatedly receives the excretion. Therefore, by placing a larger amount of antibacterial agent 60 in the back-surface-side portion 51B of the first absorbent layer 51, the excreted fluid which has been excreted repeatedly and penetrated into the absorbent layers 51 and 52 can come into contact with the more antibacterial agent 60. Accordingly, the antibacterial effect keeps over a long period of time, and the absorbent sheet 40 is suitable for the absorbent sheet which is placed in the animal litter box 1.

However, there is a possibility that the antibacterial agent 60 inhibit the absorption of the excreted fluid. Therefore, by reducing the amount of the antibacterial agent 60 provided in the top-surface-side portion 51S of the first absorbent layer 51, it makes the excreted fluid repeatedly excreted possible to permeates into the absorbent layers 51 and 52. This makes it possible to ensure the absorbency (the capacity of absorption) of the absorbent sheet 40, and the absorbent sheet 40 can be used being accommodated in the animal litter box 1 for a long period of time.

Also, by reducing the amount of the antibacterial agent 60 that is provided in the top-surface-side portion 51S of the first absorbent sheet 51, it is possible to suppress the seepage of the antibacterial agent 60 to the top-surface sheet 41 side. Accordingly, for example, at the time of placing the absorbent sheet 40 in the animal litter box 1, even when a user touches the absorbent sheet 40, it is possible to prevent from irritating the user due to the antibacterial agent 60.

As described above, the absorbent sheet 40 of the present embodiment is an animal absorbent sheet that is safe, is less likely to generate odors from the excreted fluid, and is well-absorbent for the excreted fluid.

The first absorbent layer 51 is constituted by the superabsorbent polymers 50S, and does not include the pulp fibers 50P (liquid-absorbent fibers). That is, the first absorbent layer 51 substantially does not have the pulp fibers 50P, which means the very small amount of pulp fibers 50P unexpectedly included in the first absorbent layer 51 are regarded as not included. Accordingly, in the first absorbent layer 51, especially in the top-surface-side portion 51S, which does not come into contact with the pulp fibers 50P of the second absorbent layer 52, the excreted fluid is absorbed and retained in the superabsorbent polymers 50P and is less likely to exist in the state of the free-movable water. In other words, in the top-surface-side portion 51S of the first absorbent layer 51, bacteria are less likely to be proliferated by the excreted fluid, and thus the odor generation can be suppressed without providing as much the antibacterial agent 60 as in the back-surface-side portion 51B.

It is preferable that not only the first absorbent layer 51 but also the second absorbent layer 52 contain the antibacterial agent 60. Therefore, in the space between the pulp fibers 50P included in the second absorbent layer 52, the excreted fluid that exists in the state of the free-movable water can come into contact with the antibacterial agent 60. This makes it possible to suppress the bacterial proliferation in the excreted fluid, and the odor generation from the absorbent sheet 40.

More preferably, the density of the antibacterial agent 60 is higher in a top-surface-side portion of the second absorbent layer 52 in the thickness direction than in a back-surface-side portion of the second absorbent layer 52 in the thickness direction. In other words, as shown in FIG.4, it is preferable that, when the second absorbent layer 52 is divided into two in the thickness direction, the weight (g) of the antibacterial agent 60 provided in the top-surface-side portion 52S is heavier than the weight (g) of the antibacterial agent 60 provided in the back-surface-side portion 52B.

As a result, in the boundary portion between the first absorbent layer 51 and the second absorbent layer 52, the excreted fluid that is in the state of free-movable water and disperses in the planar direction can come into contact with the more antibacterial agent 60. This makes it possible to suppress the bacterial proliferation in the excreted fluid, and the odor generation from the absorbent sheet 40. Also, the excreted fluid which has been excreted repeatedly and permeated into the absorbent layers 51 and 52 can come into contact with the more antibacterial agent 60 provided in the top-surface side of the second absorbent layer 52. Therefore, the antibacterial effect of the absorbent sheet 40 keeps over a long period of time.

On the other hand, the smaller amount of the excreted fluid permeates into the back-surface-side portion 52B of the second absorbent layer 52 than into the top-surface-side portion 52S. As a result, not providing an unnecessary amount of the antibacterial agent 60 in the back-surface-side portion 52B of the second absorbent layer 52 enables to realize cost reduction.

In addition, it is preferable that the density of the antibacterial agent 60 is higher in the top-surface-side portion 52S of the second absorbent layer 52 in the thickness direction than in the top-surface-side portion 51S of the first absorbent layer 51 in the thickness direction. In this configuration, also, in the top-surface-side portion 52S of the second absorbent layer 52, the excreted fluid that is in the state of the free-movable water and disperses in the planar direction can come into contact with the more antibacterial agent 60, making it possible to further suppress the odor generation from the absorbent sheet 40. Moreover, the excreted fluid which has been excreted repeatedly and permeated into the second absorbent layer 52 can come into contact with the more antibacterial agent 60, and the antibacterial effect keeps over a long period of time. In addition, it is possible to suppress the absorption inhibition of the excreted fluid due to the antibacterial agent 60, and also making it possible to suppress the seepage of the antibacterial agent 60 into the top-surface sheet 41 side, making it safe.

Preferably, the first cover sheet 531 (the intermediate sheet) located between the top-surface sheet 41 and the first absorbent layer 51 also contains the antibacterial agent 60. Accordingly, the excreted fluid that has been absorbed in the first cover sheet 531, in other words, the excreted fluid that is in the state of free-movable water and between fibers constituting the first cover sheet 531 can come into contact with the antibacterial agent 60. This makes it possible to suppress the odor generation from the first cover sheet 531.

In the same way, it is preferable that, the second cover sheet 532 (the other intermediate sheet) located between the second absorbent layer 52 and the back-surface sheet 42 also contains the antibacterial agent 60. Accordingly, between fibers that constitute the second cover sheet 532, and between the second absorbent layer 52 and the back-surface sheet 42, the excreted fluid that is in the state of free-movable water can come into contact with the antibacterial agent 60. This makes it possible to suppress the odor generation from the absorbent sheet 40.

As described above, the absorbent sheet 40 is provided with the antibacterial agent 60 throughout from the back-surface-side portion 51B of the first absorbent layer 51 to the first cover sheet 531. In the first absorbent layer 51, the density of the antibacterial agent 60 decreases toward the top-surface side in the thickness direction. The antibacterial agent 60 is also provided throughout from the top-surface-side portion 52S of the second absorbent layer 52 to the second cover sheet 532. In the second absorbent layer 52, the density of the antibacterial agent 60 decreases toward the back-surface side in the thickness direction.

The absorbent sheet 40 described above can be manufactured as follow: for example, the second absorbent layer 52 is overlaid on the second cover sheet 532, then a liquid that the antibacterial agent 60 is dissolved is applied thereto, and afterward the first absorbent layer 51 and the first cover sheet 531 are overlaid thereto. The order of overlaying materials and applying the antibacterial agent 60 are not limited as above, and the antibacterial agent 60 may also be applied between the first absorbent layer 51 and the second absorbent layer 52. However, the method of applying antibacterial agent 60 is also not limited as above.

The second absorbent layer 52 and the cover sheets 53 do not have to contain the antibacterial agent 60. In the thickness direction of the absorbent sheet 40, the density of the antibacterial agent 60 may be constant, instead of providing the antibacterial agent 60 with density gradient.

In the present embodiment, a "quaternary ammonium salt", which id s water-soluble antibacterial agent, is applied as the antibacterial agent 60 provided in the absorbent layers 51 and 52 and the cover sheets 53. However, the antibacterial agent 60 is not limited as above. For example, the antibacterial agent 60 may be the following materials: other organic antibacterial agents such as p-hydroxybenzoate ester; inorganic antibacterial agents including inorganic substances such as Ag, Mn, Fe, Co, Ni, Cu, Zn, etc.; and antibacterial substances including natural materials such as tea leaves or coffee grounds. These materials may be used alone or in combination. Examples of the antibacterial agents include bacteriostats such as organic acids and organic acid salts.

In the present embodiment, in the first absorbent layer 51, the second absorbent layer 52, the first cover sheet 531, and the second cover sheet 532, the same kind of the antibacterial agent 60 (quaternary ammonium salts) is used. However, the configuration is not limited thereto, and some and all of the antibacterial agents 60 provided in the members may be different.

However, preferably, at least either one of the antibacterial agent 60 included in the first absorbent layer 51 and the antibacterial agent 60 included in the second absorbent layer 52 is water-soluble. More preferably, the antibacterial agent 60 provided in the cover sheets 53 is also water-soluble. Accordingly, when the excreted fluid comes into contact with the antibacterial agent 60, the agent 60 dissolves in the excreted fluid, making it likely to cause the antibacterial effect in the entire excreted fluid. This enhances the antibacterial effect on the excreted fluid, making it possible to further suppress the odor generation from the absorbent sheet 40.

The water-soluble antibacterial agent 60 can be defined as an agent having a solubility of 20g or more per 100g of ion-exchanged water at 25 °C , and examples thereof include an ionic antibacterial agent.

Preferably, the top-surface sheet 41 also contains an antibacterial agent 70. Accordingly, the excreted fluid that is in the state of free-movable water and between fibers constituting the top-surface sheet 41 can come into contact with the antibacterial agent 70. This can suppress the bacterial proliferation in the excreted fluid that has been absorbed by the top-surface sheet 41, making it possible to alleviate the odor from the top-surface sheet 41.

Furthermore, in the present embodiment, the kind of antibacterial agent 70 contained in the top-surface sheet 41 is different from the kind of antibacterial agent 60 contained in members other than the top-surface sheet 41 (the absorbent layers 51 and 52, and the cover sheet 53). This enables a suitable provision of the antibacterial agents 60 and 70 for respective portions. Specifically, the antibacterial agent 70, which is contained in the top-surface sheet 41 where a user touches, is a silver ion, which is a highly safe substance. On the other hand, the antibacterial agent 60, which is contained in the absorbent layers 51 and 52 and the cover sheet 53, is a quaternary ammonium salt, which has a high antibacterial properties. Accordingly, it is possible to provide a highly safe and antibacterial absorbent sheet 40. However, the configuration is not limited thereto. The top-surface sheet does not have to contain the antibacterial agent 70, and the antibacterial agent in the top-surface sheet 41 may be the same kind one as the other portions.

In addition, the followings can be performed in commonly-known methods: confirming that each of portions constituting the absorbent sheet 40 (the absorbent layers 51 and 52, the cover sheet 53, the top-surface sheet 41) contains the antibacterial agent 60; and comparing the density of the antibacterial agent 60 contained in the portions. For example, there is a method in which a target portion is separated or exposed from the absorbent sheet 40, and an indicator that reacts with the antibacterial agent 60 is dropped onto it. In a case where a quaternary ammonium salt is employed as the antibacterial agent 60 like the present embodiment, a bromothymol blue solution can be used, and based on the change in color, it can be determined whether the target part contains the antibacterial agent 60. In addition, it is possible to compare the density of the antibacterial agent 60 by visually confirming difference in color density when dropping the bromothymol blue solution. Specifically, when the bromothymol blue solution drops on the top surface (the top-surface-side portion 51S) and on the back surface (the back-surface-side portion 51B) of the first absorbent layer 51, in the case where the color on the back surface side is darker, it can be confirmed that the density of the antibacterial agent 60 is higher in the back-surface-side portion 51B of the first absorbent layer 51 than in the top-surface-side portion 51S.

Moreover, as shown in the FIG.4, it is preferable that the superabsorbent polymer 50S contained in the first absorbent layer 51 is attached to the back-surface side of the first cover sheet 531 that locates between the top-surface sheet 41 and the first absorbent layer 51. That is, it is preferable that the superabsorbent polymer 50S is entangled with fibers constituting the back-surface side of the top-surface sheet 41.

Therefore, the excreted fluid that is in the state of the free-movable water and between fibers constituting the top-surface sheet 41 is made likely to be absorbed in the superabsorbent polymer 50S. This makes the excreted fluid likely to transfer from the top-surface sheet 41 to the absorbent layers 51 and 52, making the excreted fluid (the free-movable water) less likely to remain in the top-surface sheet 41. This makes it possible to suppress the bacterial proliferation in the excreted fluid kept in the top-surface sheet 41 and the odor generation from the top-surface sheet 41.

Also, as shown in FIG.4, it is preferable that the first absorbent layer 51 has a portion that a plurality of the superabsorbent polymers 50S are stacked in the thickness direction. By providing a large amount of the superabsorbent polymer 50S being stacked in the second absorbent layer 52, the more excreted fluid is absorbed and retained in the superabsorbent polymer 50S. Accordingly, the amount of excreted fluid (the free-movable water) that remains between fibers of the cover sheet 53 and the second absorbent layer 52 can be reduced, making it possible to suppress the odor generation from the absorbent sheet 40.

In addition, as a result of diligent research by the inventors of the present invention, it has been found that, in the case where the basis weight of the top-surface sheet 41 is lower than 28 g/m², the light transmittance of the top-surface sheet 41 is high, and the color of the excreted fluid that has been absorbed by the absorbent layers 51 and 52 is likely to be visually recognized through the top-surface sheet 41. Accordingly, it is preferable that the basis weight of the top-surface sheet 41 is made to be equal to or more than 28 g/m², that is, the top-surface sheet 41 has a high basis weight. This makes it less likely to visually recognize the color of the excreted fluid that has been absorbed in the absorbent layers 51 and 52, through the top-surface sheet 41. Therefore, when the a user sees the top surface of the absorbent sheet 40, the user is likely to recognize that the color of the absorbent sheet 40 is similar to one in the state before the excretion is performed, making the user less likely to be aware of the odor of the excreted fluid.

Further, it is preferable that, as shown in FIG.5A, the density of fibers that constitute the top-surface sheet 41 is higher in the top-surface-side portion of the top-surface sheet 41 in the thickness direction than in the back-surface-side portion of the top-surface sheet 41 in the thickness direction. In other words, it is preferred that the fibers of the top-surface sheet 41 become denser from the back-surface side toward the top-surface side.

Accordingly, on the top-surface side of the top-surface sheet 41, the excreted fluid is dispersed in fibers that are densely spread in the planar direction, and the excreted fluid permeates into the first absorbent layer 51 while being in the state of dispersed in the planar direction, and comes into contact with the antibacterial agent 60 of the first absorbent layer 51. That is, the more excreted fluid can come into contact with the antibacterial agent 60 and the odor generation can be suppressed. In addition, it is possible to use effectively the antibacterial agent 60 provided being dispersed in the planar direction in the first absorbent layer 51.

However, on the contrary to the configuration stated above, the following configuration is acceptable: as shown in FIG.5B, the density of fibers that constitute the top-surface sheet 41 is lower in the top-surface-side portion of the top-surface sheet 41 in the thickness direction than in the back-surface-side portion of the top-surface sheet 41 in the thickness direction. In other words, the fibers of the top-surface sheet 41 may become denser from the top-surface side toward the back-surface side.

This makes the excreted fluid likely to quickly permeate from the top-surface side to the back-surface side of the top-surface sheet 41. Thereby the excreted fluid becomes likely to transfer to the first absorbent layer 51, making the excreted fluid likely to be absorbed and retained in the superabsorbent polymer 50S. Accordingly, it is possible to reduce the amount of the excreted fluid that remains in the state of the free-movable water and between fibers constituting the top-surface sheet 41 (especially the top-surface-side portion of the top-surface sheet 41), making it possible to suppress the odor generation from the top-surface sheet 41. However, the configuration is not limited thereto, and there may be no density difference of fibers in the top-surface sheet 41 with respect to the thickness direction.

Note that the density difference of fibers provided in the top-surface sheet 41 with respect to the thickness direction can be checked using a commonly-known method. For example, a cross section of the top-surface sheet 41 taken in the thickness direction is magnified and observed using an electron microscope and the like. It is preferable to visually compared, in the enlarged image, the fibers included in each of regions of the top-surface sheet 41 which are obtained by dividing it into two in the thickness direction, or to count and compare the numbers of fibers per unit area (cross section) of the regions.

Also, it is preferable that, as shown in FIG.4, the first absorbent layer 51 contains a water-sensitive fragrance, in addition to the antibacterial agent 60. The water-sensitive fragrance is a fragrance that is released when coming into contact with excreted fluid (water). For example, there are provided a fragrance which is contained in a water-soluble microcapsule (membrane) and a fragrance which is enclosed inside a space of a structure (cyclodextrin or the like). The microcapsule has a size in which a diameter is approximately 1 to 1,000 micrometers, and examples of the material of the water-soluble microcapsule include dextrin, polyvinyl alcohol, or the like. In this case, when the excreted fluid permeates into the first absorbent layer 51 and comes into contact with the water-sensitive fragrance 80, the fragrance is released. The fragrance can mask the odor of the excreted fluid that has been excreted in the absorbent sheet 41, making the users less likely to be aware of the odor from the excreted fluid.

The fragrance is not limited to the water-sensitive fragrance, and it is preferable that the fragrance is contained in the microcapsule or is enclosed in cyclodextrin. This can suppress the fragrance from volatilizing during a period until the excreted fluid comes into contact with the absorbent sheet 40.

Moreover, the first absorbent layer 51 is not limited to containing the fragrance (water-sensitive fragrance 80), and the fragrance may be obtained in any other material (e.g., the second absorbent layer 52, the cover sheet 53, and the top-surface sheet 41). However, providing the fragrance in the first absorbent layer 51 enhances continuity of the fragrance compared to the case where, for example, the fragrance is provided in the top-surface sheet 41. Furthermore, the fragrance is likely to be released outside the absorbent sheet 40 compared to the case of providing the fragrance in the second absorbent layer 52.

It is possible to check whether the first absorbent layer 51 has the microcapsules, by observing a target portion (the first absorbent layer 51) using an electron microscope. Furthermore, it is possible to check whether the target portion contains the fragrance, by analyzing the components of the target portion where the fragrance has been released, by using a gas chromatography device, for example.

A kind of the fragrance is not particularly limited, and examples thereof include lavender, jasmine, and green herbal-like scent. Further, the absorbent sheet 40 does not have to contain the fragrance. Moreover, the water-sensitive structure (cyclodextrin) and the water-soluble microcapsule may contain an agent that exerts another function (e.g., deodorant) instead of the fragrance.

### Animal litter box 1 in which absorbent sheet 40 be placed

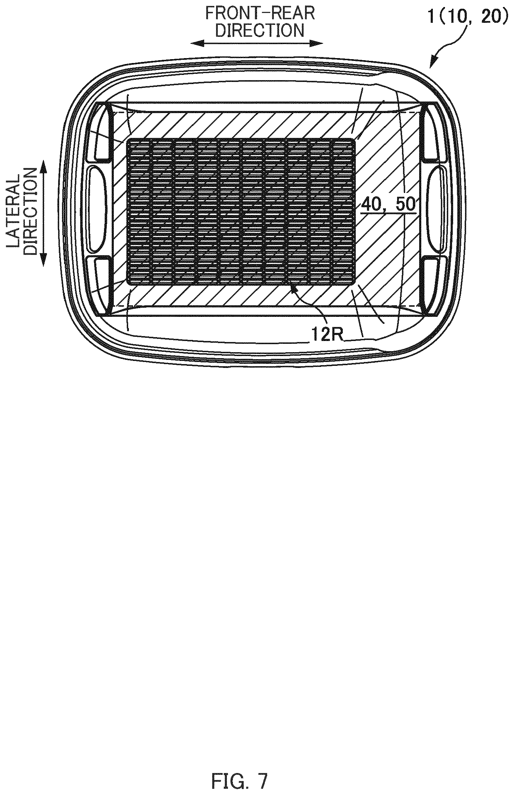

FIG. 6A is a plan view of the absorbent sheet 40, FIG. 6B is a plan view of the tray 21 provided in the animal litter box 1, and FIG. 6C is a plan view of the upper container 10. FIG. 7 is a plan view of the animal litter box 1 (upper container 10 and lower container 20) where the absorbent sheet 40 is placed.

As mentioned above, the absorbent sheet 40 is used being placed in the animal litter box 1. The absorbent sheet 40 is placed so that the longitudinal direction of the absorbent sheet 40 corresponds to the front-rear direction of the animal litter box 1, and the width direction of the absorbent sheet 40 corresponds to the lateral direction of the animal litter box 1.

The animal litter box 1 in which the absorbent sheet 40 can be placed is preferred to be as follow. It is preferable that the area of an region 12R where a plurality of holes 12 are provided on the bottom portion of the upper container 10 (hereinafter also referred to as "multiple-hole region 12R") is smaller than the area of the absorbent body 50 when the absorbent sheet 40 is viewed in the thickness direction. Specifically, as shown in the FIGS. 6A and 6C, it is preferable that the length L1 of the absorbent body 50 in the longitudinal direction is longer than the length L3 of the multiple-hole region 12R in the front-rear direction, and that the length W1 of the absorbent body 50 in the width direction is longer than the length W3 of the multiple-hole region 12R in the width direction.

As shown in FIG.7, when the animal litter box 1 in which the absorbent sheet 40 is placed is viewed from above, the entirety of the multiple-hole region 12R is likely to be placed on the absorbent body 50 of the absorbent sheet 40 (hatched portion). Therefore, the absorbent body 50 containing the antibacterial agent 60 can receive the excreted fluid that has passed through the multiple-hole region 12R, making it possible to suppress the odor generation from the excreted fluid that has been excreted in the animal litter box 1.

Furthermore, the area of the sheet housing portion 21R in the tray 21 is preferably smaller than the area of the absorbent sheet 40. Specifically, as shown in the FIGS. 6A and 6B, it is preferable that the length L1' of the absorbent sheet 40 in the longitudinal direction is longer than the length L2 of the sheet housing portion 21R in the front-rear direction, and that the length W1' of the absorbent sheet 40 in the width direction is longer than the length W2 of the sheet housing portion 21R in the width direction.

Therefore, in the case where the absorbent sheet 40 is placed in the tray 21, the absorbent sheet 40 can be arranged over the entirety of the sheet housing portion 21R in the planar direction. The excreted fluid that has been received by the tray 21 is absorbed by the absorbent body 50 containing the antibacterial agent 60, making it possible to suppress the odor generation from the excreted fluid in the animal litter box 1.

In the present embodiment, the sheet housing portion 21R of the animal litter box 1, the absorbent sheet 40, and the absorbent body 50 have the same planar shape, a rectangle. This makes the absorbent body 50 likely to be arranged extending across the wide range of the sheet housing portion 21R in the tray 21. However, the configuration is not limited thereto, and the planar shape can differ as long as the absorbent sheet 40 can be placed in the sheet housing portion 21R.

### Other Embodiments

Although the embodiment of the present disclosure has been described hereinabove, the above embodiment of the present disclosure is simply to facilitate understanding of the present disclosure and is not in any way to be construed as limiting the present disclosure. The present disclosure may variously be changed or altered without departing from its gist and encompass equivalents thereof.

### REFERENCE SIGNS LIST

1: animal litter box
10: upper container, 11: bottom portion, 12: hole,
20: lower container, 21: tray,
30: cover, 31: opening,
40: (animal) absorbent sheet,
41: top-surface sheet, 42: back-surface sheet, 43: joining portion,
50: absorbent body,
51: first absorbent layer, 52: second absorbent layer,
531: first cover sheet (intermediate sheet)
532: second cover sheet (other intermediate sheet)
50P: pulp fiber (liquid-absorbent fiber),
50S: superabsorbent polymer,
60: antibacterial agent,
70: antibacterial agent,
80: water-sensitive fragrance

## Claims

1. An animal absorbent sheet used for an animal litter box,
the animal litter box including:
an upper container having a plurality of holes on a bottom portion; and
an lower container for receiving an excreted fluid that has passed through the plurality of holes,
the animal absorbent sheet being placed in the lower container of the animal litter box,
the animal absorbent sheet comprising:
an liquid-permeable top-surface sheet;
an liquid-impermeable back-surface sheet that is located on a one side of the top-surface sheet in a thickness direction of the animal absorbent sheet; and
an absorbent body that is located between the top-surface sheet and the back-surface sheet,
the absorbent body having a first absorbent layer and a second absorbent layer that is located closer to a one side in the thickness direction with respect to the first absorbent layer,
the first absorbent layer being a layer that contains a superabsorbent polymer,
the second absorbent layer being a layer formed of mixture of a liquid-permeable fiber and the superabsorbent polymer,
the first absorbent layer containing an antibacterial agent,
a density of the antibacterial agent being higher
in a one-side portion of the first absorbent layer in the thickness direction than
in an other-side portion of the first absorbent layer in the thickness direction.

2. The animal absorbent sheet according to claim 1, wherein
the second absorbent layer contains an antibacterial agent.

3. The animal absorbent sheet according to claim 2, wherein
the density of the antibacterial agent is higher in an other-side portion of the second absorbent layer in the thickness direction than in a one-side portion of the second absorbent layer in the thickness direction.

4. The animal absorbent sheet according to claim 2 or 3, wherein
at least either one of the antibacterial agent contained in the first absorbent layer and the antibacterial agent contained in the second absorbent layer is water-soluble.

5. The animal absorbent sheet according to any one of claims 1 to 4, wherein
the animal absorbent sheet has a liquid-permeable intermediate sheet between the top-surface sheet and the first absorbent layer, and
the superabsorbent polymer contained in the first absorbent layer is attached to a back-surface side of the intermediate sheet.

6. The animal absorbent sheet according to any one of claims 1 to 5, wherein
the animal absorbent sheet has a liquid-permeable intermediate sheet between the top-surface sheet and the first absorbent layer, and
the intermediate sheet contains an antibacterial agent.

7. The animal absorbent sheet according to any one of claims 1 to 6, wherein
the animal absorbent sheet has a liquid-permeable other intermediate sheet between the second absorbent layer and the back-surface sheet, and
the other intermediate sheet contains an antibacterial agent.

8. The animal absorbent sheet according to any one of claims 1 to 7, wherein
a basis weight of the top-surface sheet is equal to or more than 28 g/m².

9. The animal absorbent sheet according to any one of claims 1 to 8, wherein
the top-surface sheet contains an antibacterial agent.

10. The animal absorbent sheet according to any one of claims 1 to 9, wherein
a density of fibers that constitute the top-surface sheet is higher in an other-side portion of the top-surface sheet in the thickness direction than in a one-side portion of the top-surface sheet in the thickness direction.

11. The animal absorbent sheet according to any one of claims 1 to 9, wherein
a density of fibers that constitute the top-surface sheet is lower in an other-side portion of the top-surface sheet in the thickness direction than in a one-side portion of the top-surface sheet in the thickness direction.

12. The animal absorbent sheet according to any one of claims 1 to 11, wherein
the first absorbent layer has a portion that a plurality of the superabsorbent polymers are stacked in the thickness direction.

13. The animal absorbent sheet according to any one of claims 1 to 12, wherein
the first absorbent layer contains a water-sensitive fragrance.

14. The animal absorbent sheet according to any one of claims 1 to 13, wherein
a density of the antibacterial agent is higher in an other-side portion of the second absorbent layer in the thickness direction than in the other-side portion of the first absorbent layer in the thickness direction.

15. The animal litter box in which the animal absorbent sheet according to any one of claims 1 to 14 can be placed, wherein
an area of a region on the upper container where the plurality of holes are provided is smaller than an area of the absorbent body when the animal absorbent sheet is viewed in the thickness direction.
